# EUROPEAN PATENT SPECIFICATION

(11) **EP 3 141 747 B1**
(45) Date of publication and mention of the grant of the patent: **02.09.2020**
(21) Application number: 15184257.2
(22) Date of filing: 08.09.2015
(51) Int. Cl.: F03D 80/00, F16C 33/58

(54) **REINFORCED BEARING OF A WIND TURBINE**
VERSTÄRKTES LAGER EINER WINDTURBINE
PALIER RENFORCÉ POUR UNE ÉOLIENNE

(43) Date of publication of application: 15.03.2017
(73) Proprietor: Siemens Gamesa Renewable Energy A/S, 7330 Brande (DK)
(72) Inventor: Kumar, Shravan, 7330 Brande (DK)
(74) Representative: Aspacher, Karl-Georg

(56) References cited:
- EP-A1- 2 669 510
- EP-A1- 2 933 476
- EP-A2- 2 045 464
- DE-A1-102010 010 639
- US-A1- 2009 311 104

## Description

The present invention relates to a main bearing of a wind turbine.

In particular, it relates to a main bearing of a wind turbine wherein the rotating raceway is selectively reinforced. Furthermore, the invention relates to a wind turbine with such a main bearing.

The rotor of a wind turbine is connected with the nacelle via the main bearing. In direct-drive wind turbines the rotor is directly connected with the generator via the main bearing. In geared wind turbines the rotor is connected with the generator via the main bearing and a gear box. In any case, considerable forces and loads are exerted on the main bearing. These loads do not only include torque but also tilting forces. In other words, radial and axial forces which can achieve considerable magnitude act on the main bearing. As a consequence, a common challenge for the main bearing is to remain and keep its shape during many years of being exposed to these loads. In practice, deformation of the main bearing may occur. This deformation mainly impacts the raceways of the main bearing. EP2669510A1 discloses a direct-drive wind turbine in which a brake disc also acts as a stiffening ring for the stationary ring of the main bearing.

Likewise, the pitch bearing of a wind turbine, which pivotable connects the rotor blades to the hub of the wind turbine, is exposed to considerable forces and loads. These loads may result in deformation of the raceways of the pitch bearing - a phenomenon which is also referred to as "ovalization" of the pitch bearing. US2009/0311104A1 and EP20145464A2 both propose a pitch bearing with a stiffening element secured to the stationary part of the bearing.

However, deformations of the raceways which commonly occur typically do not occur homogenously on all angular positions to the same extent, but the stiffening means of the proposed bearing designs act over the entire circumference of the bearing.

Thus, it is the object of this invention to provide a concept how to reduce or even completely avoid inhomogeneous deformations of a bearing of a wind turbine.

This objective is solved by the independent claims. Advantageous modifications and amendments are described in the dependent claims.

According to the invention there is provided a main bearing of a wind turbine with three rotor blades, wherein the bearing comprises an annular stationary raceway, which is arranged and prepared to be rigidly connected to a nacelle of the wind turbine, and an annular rotating raceway, which is arranged and prepared to be rigidly connected to a hub of the wind turbine. Both raceways are arranged such with regard to each other that their axes of symmetry coincide. Each raceway comprises a rear surface, which is directed towards the nacelle, and a front surface, which is directed to the hub of the wind turbine. Furthermore, the rotating raceway is selectively reinforced by reinforcement means which are attached on the front surface of the rotating raceway in the angular sections where the rotor blades are attached to the hub, and/or on the rear surface of the rotating raceway in the angular sections between two adjacent rotor blades.

The inventors have realized that deformations of the raceways which commonly occur typically do not occur homogenously on all angular positions to the same extent. There exist preferred angular sections of deformation. By knowing which parts of the raceways are particularly prone to deformation, these (and only these) particular angular sections may be reinforced.

This has the advantage that not the entire raceway has to be reinforced but only the more affected parts of the raceways are selectively reinforced. As a consequence, this saves material and costs and still leads to the same result, namely to provide a raceway of a bearing which is much less likely to deform during operation of the wind turbine.

This is contrary to what is known from prior art. In the prior art the raceways of a bearing of a wind turbine are always designed and configured in a circumferentially and angularly homogenous way. In other words, the whole raceway is designed with a structural stability that it meets the requirements of the most affected part of the raceway. By selectively reinforcing or stiffening certain parts of the raceway, material and costs can be reduced considerably.

Any bearing of a wind turbine typically comprises an inner ring and an outer ring. These two rings represent the raceways of the bearing. Thus, it can be said that the bearing comprises an annular first raceway and an annular second raceway which are arranged with each other such that they can rotate relative to each other. Thus, in the following one of the two raceways is referred to as the stationary raceway and the other raceway is referred to as the rotating raceway.

The inventive concept is applied to the main bearing of a wind turbine. Regarding the main bearing of a wind turbine, the stationary raceway is defined as the raceway which is stationary relative to the nacelle of the wind turbine and the rotating raceway is referred to as the raceway which is rotatable relative to the nacelle of the wind turbine. Both raceways are substantially rotational symmetric. Thus, both raceways feature a rotational axis of symmetry. As both raceways are arranged coaxially with regard to each other, these axes of symmetry coincide. Additionally, the rotational axis of the rotor and the rotational axis of the rotating raceway coincide with these axes of symmetry.

Furthermore, each raceway comprises a rear surface which is directed towards the nacelle. Thus, there exists a rear surface of the stationary raceway and a rear surface of the rotating raceway. Likewise, there exists a front surface of the stationary raceway and a front surface of the rotating raceway.

Regarding the example of a pitch bearing, the stationary raceway is arranged and prepared to be connected to the hub of the wind turbine, while the rotating raceway is arranged and prepared to the rotor blade of the wind turbine, in particular to the root section of the rotor blade.

A key aspect of the present invention is that either the front surface of the rotating raceway or the rear surface of the rotating raceway are selectively reinforced. This means that the raceways are not entirely reinforced or stiffened, but that they are selectively stiffened. This implies that the angular distribution of the reinforcement is inhomogeneous.

A consequence of these selectively reinforced bearings is that less damage and failure of the bearing is ensured while at the same time a minimum of extra material is used.

In principle, the stationary raceway may be arranged radially more outwards compared to the rotating raceway or the rotating raceway may be arranged radially more outwards compared to the stationary raceway.

In a particularly preferred embodiment of the invention, the rotating raceway is located radially more outwards than the stationary raceway. This can also be expressed by the statement that the stationary raceway has a smaller diameter than the rotating raceway.

It could be advantageous to attach the reinforcement means to the raceway via attachment means such as bolts, screws or an adhesive. This solution is advantageous if an existing bearing is retrofitted. For newly fabricated bearings, it seems however advantageous to build the raceway as one single piece together with the selectively placed reinforcement means.

This has the advantage of increased stability and increased resistant against applied loads on the bearing.

In an advantageous embodiment of the invention, the rotating raceway is reinforced on the front surface in the angular section where the rotor blades are attached to the hub.

The front surface of the rotating raceway is also referred to as the upwind side. Thus it means that the rotating raceway is reinforced on the upwind side at these angular regions where the rotor blades are present. This has been proven to be advantageous because on the upwind side of the main bearing increased loads on the raceway are applied particularly where the rotor blades are present. Thus, it is advantageous to reinforce selectively these angular regions.

Regarding the rear surface of the rotating raceway, which is also referred to as the downwind side of the raceway, it has been proven that particularly the angular regions between two adjacent rotor blades is prone to deformations due to increased loads. Thus, it is advantageous to selectively reinforce on the downwind side of the raceway the regions between adjacent rotor blades.

Another parameter which can be considered by choosing the optimum reinforcement of the raceway is its radial dependency. It is thus particularly advantageous to radially vary the reinforcement of the stationary raceway and/or of the rotating raceway. Particularly, this variation is equal or greater than twenty per cent by comparing the most reinforced region with the less reinforced region.

Thus, the selective reinforcement of the raceways may be realized by radially and/or circumferential varying the reinforcement.

Note that variation in the reinforcement capabilities may for example be achieved by a varying thickness of these extra parts which are added to a plane front or rear surface of the raceway. Alternatively, a varying reinforcement may also be achieved by a variation in the material choice and keeping the thickness of the added parts constant.

In particular the reinforcement may increase with increasing distance from the axis of rotation of the rotating raceway. This applies for both reinforcements of the stationary raceway and the rotating raceway.

In another advantageous embodiment of the invention, the rotating raceway is connected to the hub by a separator for damping a load from the hub and the separator is reinforced differently with regard to its angular position.

In this embodiment it is appreciated that the separator which is present between the rotating raceway of the main bearing and the hub is reinforced selectively. This reinforcement also takes into account that the separator is exposed to different loads during typical operation of the wind turbine. By selectively and deliberately reinforcing these sections of the separator which are typically most heavily loaded, an advantageous way of increasing the stability and load resistance of the main bearing is achieved.

Finally, the invention is also directed towards a wind turbine comprising such a main bearing.

Embodiments of the invention are now described, by way of example only, with reference to the accompanying drawings, of which:
- Figure 1: shows a wind turbine;
- Figure 2: shows a bearing according to the state of the art;
- Figure 3: shows a first embodiment of an inventive bearing;
- Figure 4: shows a second embodiment of the inventive bearing;
- Figure 5: shows a third embodiment of the inventive bearing; and
- Figure 6: shows a fourth embodiment of an inventive bearing.

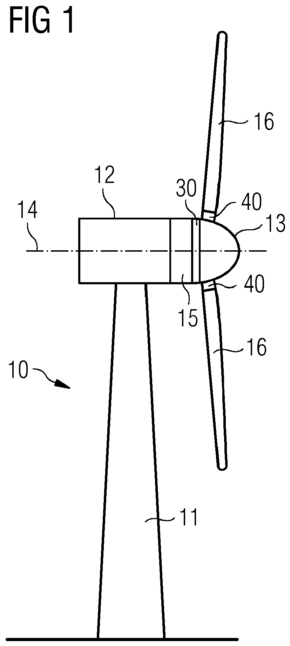

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 16 (of which two rotor blades 16 are depicted in Figure 1). The hub 13 is mounted rotatable with regard to the nacelle 12 by means of a main bearing 30. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

Furthermore, Figure 1 shows a pitch bearing 40, which pivotable connects the rotor blade 16 with the hub 13.

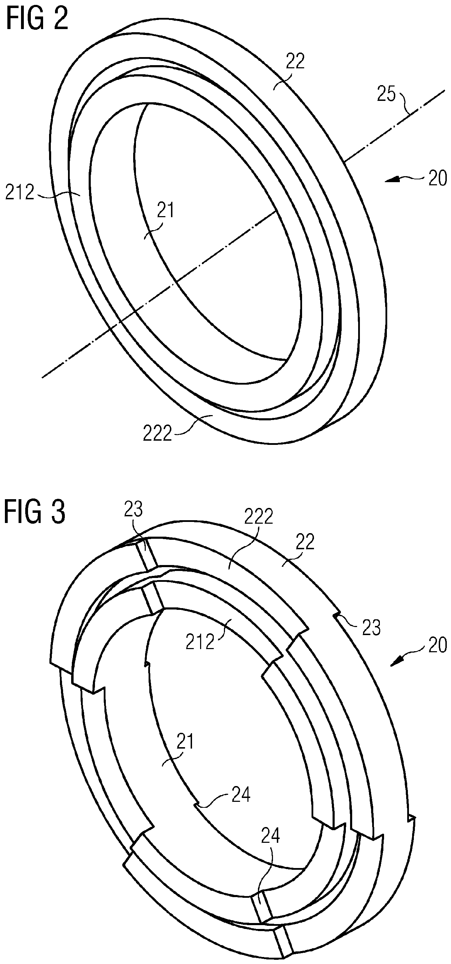

Figure 2 is a perspective view of a bearing 20 of a wind turbine according to the state of the art. For sake of simplicity and a better overview, only the two raceways, namely the inner stationary raceway 21 and the outer rotating raceway 22 are shown. Both raceways 21, 22 are shaped with an annular shape and are arranged coaxially about a common axis of symmetry 25. Within the gap between the stationary raceway 21 and the rotating raceway 22 rolling elements such as balls or cylinders may be present (not shown).

It can be seen in the prior art bearing shown in Figure 2 that the front surfaces 212, 222 of the stationary raceway 21 and the rotating raceway 22, respectively, are designed as plane surfaces. As a consequence, load supporting capabilities of the raceways 21, 22 are equal at all angular positions. However, actual loads occurring and applying on the raceways 21, 22 are not equally distributed in angular respect. Thus, a selective reinforcement as proposed in the present invention is advantageous.

Figure 3 shows a first example how this selective reinforcement may be realized in practice. A stationary raceway 21 and a rotating raceway 22 is shown. At the rotating raceway 22 reinforcement means 23 are applied on the front surface 222 of the rotating raceway 22. The bearing 20 shown in Figure 3 is directed to a wind turbine with three rotor blades. Thus, the exemplary bearing in Figure 3 represents a main bearing of a wind turbine.

Note that the reinforcement elements of the rotating raceway are referred to as "reinforcement means 23", while the reinforcement elements of the stationary raceway are referred to as "reinforcement means 24" or "further reinforcement means 24" throughout this application.

By reinforcing the rotating raceway 22 at precisely these angular sections where the rotor blades are destined to be mounted, the increased loads which are exerted from the main bearing from upwind side at the sections where the rotor blades are present, is favorably met. As a consequence, the thickness of the rotating raceway 22 changes in distances or gaps of sixty degrees. The same applies to the rear surface 223 of the rotating raceway 22. There also reinforcement means 23 are provided. However, as at the rear surface or on the downwind side increased loads typically occur in the regions between the blades, these regions are selectively reinforced.

The same pattern of providing reinforcement means at regularly placed positions on the front surface and the rear surface is applied to the stationary inner raceway 21. The further reinforcement means 34 are offset by sixty degrees.

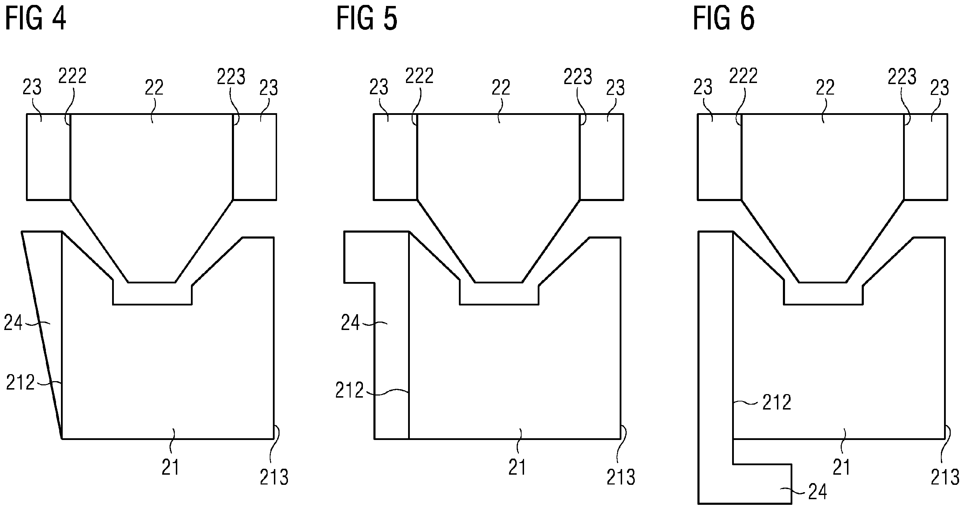

Figures 4 to 6 show three embodiments of the invention where the reinforcement is varying in radial respect. An inner stationary raceway 21 and an outer rotating raceway 22 are shown. Both raceways 21, 22 exhibit a front surface 212, 222, respectively. Likewise, both raceways 21, 22 exhibit a rear surface 213, 223, respectively.

In the embodiment of Figure 4, the front surface 212 of the stationary raceway 21 is reinforced by a triangular-shaped or wedge-shaped element, i.e. reinforcement means 24. For this reinforcement means 24, the thickness is decreasing with decreasing distance to the axis of symmetry or rotational axis of the rotating raceway (not shown). With respect to the rotating raceway 22, no radial variation of the reinforcement means 24 at the front surface 321 and the rear surface 322 has been realized.

In Figure 5, another alternative of an advantageous embodiment of the invention is illustrated. The design of the reinforced rotating raceway is similar to the embodiment of Figure 4. However, the reinforcement means 24 which is attached to the front surface 212 of the stationary raceway 21 has been designed as a step-like reinforcement means 34. Similar to the embodiment of Figure 4, however, the thickness of the reinforcement means 24 is larger for the part which is further away of the rotational axis of the rotating raceway than the part which is closer to the rotational axis of the rotating raceway.

Finally, Figure 6 shows yet another embodiment of a bearing according to the invention. Again, the radial distribution or variation of the reinforcement means 23 of the rotating raceway 22 is constant. However, the reinforcement means 24 which is attached to the front surface 212 of the stationary raceway 21 is relatively thin at the upper end, i.e. the radially more outward end, of the stationary raceway 21 and is thicker for a bottom part, i.e. a more radially inward part of the stationary raceway ("L-shaped"). The design as shown in Figure 6 is thus a further example how to selectively choose the design of the reinforcement means in order to optimally meet the present load distribution which are applying on the bearing.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention, which is defined by the appended claims.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Main bearing (20) of a wind turbine (10) with three rotor blades (16),
wherein
- the bearing (20) comprises an annular stationary raceway (21), which is arranged and prepared to be rigidly connected to a nacelle (12) of the wind turbine (10), and an annular rotating raceway (22), which is arranged and prepared to be rigidly connected to a hub (13) of the wind turbine (10),
- both raceways (21, 22) are arranged such with regard to each other that their axes of symmetry (25) coincide,
- each raceway (21, 22) comprises a rear surface (213, 223), which is directed towards the nacelle (12), and a front surface (212, 222), which is directed to the hub (13), **characterized in that**
- the rotating raceway (22) is selectively reinforced by reinforcement means (23) which are attached on the front surface (222) of the rotating raceway (22) in the angular sections where the rotor blades (16) are attached to the hub (13), and/or on the rear surface (223) of the rotating raceway (22) in the angular sections between two adjacent rotor blades (16).

2. Bearing (20) according to claim 1,
wherein the stationary raceway (21) has a smaller diameter than the rotating raceway (22).

3. Bearing (20) according to one of the preceding claims, wherein the rotating raceway (22) and the reinforcement means (23) are built as one single piece.

4. Bearing (20) according to one of the preceding claims, wherein the selective reinforcement of the rotating raceway (22) is achieved by a circumferential variation of the reinforcement in which the thickness of the rotating raceway (22) changes in distances of sixty degrees.

5. Bearing (20) according to one of the preceding claims, wherein the selective reinforcement of the rotating raceway (22) is achieved by a radial variation of the reinforcement.

6. Bearing (20) according to one of the preceding claims, wherein the thickness of the reinforcement means (23) is constant in circumferential and/or radial direction.

7. Bearing (20) according to claims 1 to 5,
wherein the thickness of the reinforcement means (23) varies in circumferential and/or radial direction, in particular by at least twenty per cent.

8. Bearing (20) according to one of the preceding claims, wherein the stationary raceway (21) is selectively reinforced by further reinforcement means (24) which are attached on the front surface (212) of the stationary raceway (21) and/or on the rear surface (213) of the stationary raceway (21).

9. Wind turbine (10) for generating electricity, comprising a main bearing (20) according to one of the preceding claims.

## Patentansprüche

1. Hauptlager (20) einer Windenergieanlage (10) mit drei Rotorblättern (16),
wobei
- das Lager (20) einen ringförmigen, stationären Laufring (21), der so angeordnet und ausgelegt ist, dass er fest mit einer Gondel (12) der Windenergieanlage (10) verbunden wird, und einen ringförmigen, rotierenden Laufring (22) umfasst, der so angeordnet und ausgelegt ist, dass er fest mit einer Nabe (13) der Windenergieanlage (10) verbunden wird,
- beide Laufringe (21, 22) in Bezug zueinander so angeordnet sind, dass ihre Symmetrieachsen (25) zusammenfallen,
- jeder Laufring (21, 22) eine hintere Fläche (213, 223), die zur Gondel (12) weist, und eine vordere Fläche (212, 222) umfasst, die zur Nabe (13) weist,
**dadurch gekennzeichnet, dass**
- der rotierende Laufring (22) gezielt durch Verstärkungsmittel (23) verstärkt ist, die an der vorderen Fläche (222) des rotierenden Laufrings (22) in den Winkelbereichen angebracht sind, in denen die Rotorblätter (16) an der Nabe (13) angebracht sind, und/oder an der hinteren Fläche (223) des rotierenden Laufrings (22) in den Winkelbereichen zwischen zwei benachbarten Rotorblättern (16) angebracht sind.

2. Lager (20) nach Anspruch 1,
wobei der stationäre Laufring (21) einen geringeren Durchmesser aufweist als der rotierende Laufring (22).

3. Lager (20) nach einem der vorhergehenden Ansprüche,
wobei der rotierende Laufring (22) und die Verstärkungsmittel (23) einstückig aufgebaut sind.

4. Lager (20) nach einem der vorhergehenden Ansprüche,
wobei die gezielte Verstärkung des rotierenden Laufrings (22) durch einen Unterschied bei der Verstärkung in Umfangsrichtung erreicht wird, bei der sich die Dicke des rotierenden Laufrings (22) in Abständen von sechzig Grad ändert.

5. Lager (20) nach einem der vorhergehenden Ansprüche,
wobei die gezielte Verstärkung des rotierenden Laufrings (22) durch einen radialen Unterschied bei der Verstärkung erreicht wird.

6. Lager (20) nach einem der vorhergehenden Ansprüche,
wobei die Dicke der Verstärkungsmittel (23) in Umfangs- und/oder radialer Richtung konstant ist.

7. Lager (20) nach den Ansprüchen 1 bis 5,
wobei sich die Dicke der Verstärkungsmittel (23) in Umfangs- und/oder radialer Richtung insbesondere um mindestens zwanzig Prozent unterscheidet.

8. Lager (20) nach einem der vorhergehenden Ansprüche,
wobei der stationäre Laufring (21) gezielt durch weitere Verstärkungsmittel (24) verstärkt ist, die an der vorderen Fläche (212) und/oder an der hinteren Fläche (213) des stationären Laufrings (21) angebracht sind.

9. Windenergieanlage (10) zum Erzeugen von Strom mit einem Hauptlager (20) nach einem der vorhergehenden Ansprüche.

## Revendications

1. Palier principal (20) d'une éolienne (10) pourvu de trois pales de rotor (16),
dans lequel
- le palier (20) comprend un chemin de roulement fixe annulaire (21), qui est agencé et préparé pour être solidarisé à une nacelle (12) de l'éolienne (10), et un chemin de roulement rotatif annulaire (22), qui est agencé et préparé pour être solidarisé à un moyeu (13) de l'éolienne (10),
- les deux chemins de roulement (21, 22) sont agencés l'un par rapport à l'autre de façon à ce que leurs axes de symétrie (25) coïncident,
- chaque chemin de roulement (21, 22) comprend une surface arrière (213, 223), qui est dirigée vers la nacelle (12), et une surface avant (212, 222), qui est dirigée vers le moyeu (13), **caractérisé en ce que :**
- le chemin de roulement rotatif (22) est renforcé de manière sélective par des moyens de renforcement (23) qui sont fixés sur la surface avant (222) du chemin de roulement rotatif (22) dans les sections angulaires où les pales de rotor (16) sont fixées au moyeu (13), et/ou sur la surface arrière (223) du chemin de roulement rotatif (22) dans les sections angulaires entre les deux pales de rotor adjacentes (16) .

2. Palier (20) selon la revendication 1,
dans lequel le chemin de roulement fixe (21) présente un diamètre inférieur par rapport au chemin de roulement rotatif (22) .

3. Palier (20) selon l'une des revendications précédentes,
dans lequel le chemin de roulement rotatif (22) et les moyens de renforcement (23) sont construits en une seule pièce.

4. Palier (20) selon l'une des revendications précédentes,
dans lequel le renforcement sélectif du chemin de roulement rotatif (22) est obtenu par une variation circonférentielle du renforcement dans laquelle l'épaisseur du chemin de roulement rotatif (22) change dans des distances de soixante degrés.

5. Palier (20) selon l'une des revendications précédentes,
dans lequel le renforcement sélectif du chemin de roulement rotatif (22) est obtenu par une variation radiale du renforcement.

6. Palier (20) selon l'une des revendications précédentes, dans lequel l'épaisseur des moyens de renforcement (23) est constante dans une direction circonférentielle et/ou radiale.

7. Palier (20) selon les revendications 1 à 5,
dans lequel l'épaisseur des moyens de renforcement (23) varie dans une direction circonférentielle et/ou radiale, en particulier d'au moins vingt pour cent.

8. Palier (20) selon l'une des revendications précédentes,
dans lequel le chemin de roulement fixe (21) est renforcé de manière sélective par des moyens de renforcement supplémentaires (24) qui sont fixés sur la surface avant (212) du chemin de roulement fixe (21) et/ou sur la surface arrière (213) du chemin de roulement fixe (21).

9. Éolienne (10) permettant de générer de l'électricité, comprenant un palier principal (20) selon l'une des revendications précédentes.
